# EUROPEAN PATENT SPECIFICATION

(11) **EP 1 650 260 B1**
(45) Date of publication and mention of the grant of the patent: **21.12.2011**
(21) Application number: 05256471.3
(22) Date of filing: 19.10.2005
(51) Int. Cl.: C08L 67/02

(54) **Beverage container and process for producing the same**
Getränkebehälter und dessen Herstellungsverfahren
Récipient de boisson et son procédé de fabrication

(30) Priority: 19.10.2004 IN CH10962004
(43) Date of publication of application: 26.04.2006
(73) Proprietor: Futura Polyesters Limited, Mumbai 400 013 (IN)
(72) Inventor: Tammaji, Kulkarni Sanjay, Chennai 600068, Tamil Nadu (IN); Harish, Bisht, Chennai 600068, Tamil Nadu (IN); Subbaraman, Lakshminarayanapuram Ramaswami, Chennai 600068, Tamil Nadu (IN)
(74) Representative: Williams, Paul Edwin

(56) References cited:
- WO-A-00/12628
- DATABASE CA [Online] CHEMICAL ABSTRACTS SERVICE, COLUMBUS, OHIO, US; OGAWA, TATSUYA ET AL: "Poly(ethylene terephthalate)-based films containing uniformly dispersed inert particles and manufacture of compositions therefor" XP002361380 retrieved from STN Database accession no. 2004:309984 -& JP 2004 114493 A (TEIJIN LTD., JAPAN) 15 April 2004 (2004-04-15)
- DATABASE CA [Online] CHEMICAL ABSTRACTS SERVICE, COLUMBUS, OHIO, US; FURUYA, KOJI ET AL: "Polyester film for packaging" XP002361381 retrieved from STN Database accession no. 2003:749944 -& JP 2003 266535 A (TEIJIN-DU PONT FILM INC., JAPAN) 24 September 2003 (2003-09-24)

## Description

The present invention relates to resins suitable for use in the manufacture of bottles and containers for filling with beverages such as beer, and methods for making the resin and methods for making bottles using the resin.

This invention also relates to a resin and a process for making resins having suitable oxygen scavenging properties and gas barrier properties.

The resins formed in accordance with this invention contain suitable gas barrier agents and oxygen scavengers such that the stretch blow molded monolayer bottles made out of these blend resins have adequate CO₂ and O₂ barrier properties and are capable of withstanding tunnel pasteurization of beverages like beer.

One of the fastest growing trends in the food packaging industry is the conversion from conventional glass and metal packaging materials to ones made of plastic. There are many advantages in using plastic materials such as reductions in weight and cost, but the barrier properties of these materials are invariably different from the conventional packaging systems, thus impacting the shelf stability of the product. A major concern for many products, and particularly for beverages like beer, is oxidation degradation by oxygen ingress causing taste changes and darkening of the beer, flattening of taste by carbon dioxide loss, and damage due to UV light. Over the planned shelf life of a bottle about 1 ppm oxygen maximum ingress into the bottle is acceptable. The egress of carbon dioxide from the beverage through the bottle walls also has to be attenuated to a minimum. For successful conversion from glass to plastic it is very essential to consider oxygen, carbon dioxide, water vapor, and flavor scalping (i.e. flavor degradation due to oxygen contamination) as they affect the quality of the products particularly when stored over extended periods of time.

The prevailing monolayer PET bottle is not equivalent to a glass bottle in either carbonation retention or oxygen barrier properties. While glass offers a shelf life of minimum 6 months, the 33-g PET bottle is coded for seven weeks. Consequently, distribution channels have to be carefully selected. Supermarkets, for instance, may not receive these bottles. But liquor stores, convenience stores, and the hotel and restaurant trade may accept these beverages packed in PET bottles as beverages from such outlets are typically consumed shortly after they are purchased. The main advantage of these bottles is that they are shatter resistant.

PET resins are widely used in the food packaging industry, in such products as bottles and films. PET bottles are used for the carbonated soft drink, fruit juice and mineral water. These products have a shelf life of 8-12 weeks and over this period the gas permeability properties of PET are considered sufficient. However, alcoholic beverages like beer are much more sensitive to oxygen and carbon dioxide diffusion either into or out of the bottle. When this sensitivity to migrating gases is combined with the need for a longer shelf life, it is necessary to improve on the gas permeability properties of PET.

Converting beer from glass to PET is a daunting challenge, requiring a barrier against carbon dioxide egress and oxygen ingress, protection from UV light, while also retaining clarity and thermal stability for withstanding tunnel pasteurization at 60°C for 20 to 30 minutes apart from recyclability of the bottles back into the usage stream as per conventional technology. To overcome gas ingress-egress, the bottle industry manufacturers who wish to convert to synthetic polymer bottles have several options:
[a] Various techniques are used to remove oxygen from the product. These include removing the oxygen under vacuum, sparging the product with an inert gas (i.e. filling the bottle or other container with inert gas to thereby expel reactive gasses), and packaging the product in an inert atmosphere. These techniques may eliminate head space oxygen but do not address the problem of permeation of oxygen permeating through the bottle walls into the bottle cavity and into the product.
[b] Another technique is to build CO₂ and O₂ barriers into PET bottles by designing a multi-layer structure sandwiching PET structural layers around a core layer or layers containing higher-priced barrier materials. This approach stands to benefit from promising new barrier materials such as nylon-based nano composites and "passive-active" barrier systems. The latter are dual-acting formulations of a passive barrier material and an active oxygen scavenger that blocks O₂ entry and also absorbs O₂ from the head space and contents. A number of new barrier materials favor proliferation of multi-layer PET containers. Materials like MXD6 nylon and ethylene vinyl alcohol (EVOH) are well known. Multilayered bottles have been tried, in which apart from PET one of the layers is a resin such as ethylene vinyl alcohol [EVOH] or Poly vinyl diethylene chloride [PVDC] which exhibit passive resistance to oxygen. As is clear, in this method thin layers of barrier polymers that have low gas permeability are sandwiched in the center of a bottle wall encapsulated by PET on either side.

US patent 6787094 discloses a method for making multilayer injection molded plastic articles in successive mold cavities. In a first molding step, an inner sleeve is molded on a core in a first mold cavity, which may comprise a full body length sleeve or only a partial sleeve, such as an upper neck finish portion. The sleeve and core are withdrawn from the first mold cavity while the sleeve is still warm, and transferred without substantial delay to a second mold cavity for injection molding an outer layer which bonds to the inner sleeve. By transferring the sleeve at an elevated temperature into the second mold cavity, an improved bond is formed between the inner sleeve and outer layer which resists separation during a later reheat stretch blow molding step, and/or in use of the resulting article. In a preferred embodiment, a pasteurizable beer container is provided having a finish-only sleeve of a PEN polymer.

Published PCT patent application WO 9702939 discloses sleeve molding apparatus and methods for making multilayer injection molded plastic articles in successive mold cavities. In a first molding step, an inner sleeve is molded on a core in a first mold cavity, which may comprise a full body length sleeve or only a partial sleeve, such as an upper neck finish portion. An improved bond is formed between the inner sleeve and outer layer which resists separation during a later reheat stretch blow molding step, and/or in use of the resulting article. In a preferred embodiment, a pasteurizable beer container is provided having a finish only sleeve of a PEN polymer.

Although advances in multi-layer and surface-coating technologies are diminishing the cost advantage of glass bottles and metal cans for beer, carbonated soft drinks (CSDs), oxygen-sensitive juices, and hot-filled foods, and new barrier resins and oxygen scavengers, lower-cost surface coatings, and higher-output multi-layer PET preform molding systems are on continuous development, delamination with time, incapacity for tunnel pasteurizability at 60°C for 20-30 minutes and serious constraints in recyclability through conventional streams remain as serious limitations, and moreover such multilayered bottles are difficult and relatively more expensive to make.

Surface-coating technologies apply a super-thin barrier to one surface of a mono layer PET bottle. Several available barrier-coating technologies are differentiated by the type of coating material, coating placement (interior or exterior), and application method. These coatings lower the overall ingress of gas into the beverage. These techniques use materials such as graphite, silica, and epoxy resins to achieve the effect. This technique again involves additional steps in the bottle forming process and is therefore more expensive. These also suffer from incapacity to withstand tunnel pasteurizability at 60°C for 20-30 minutes and recyclability through conventional recycling streams.

The "ideal" route to a barrier PET bottle is a monolayer polyester structure. This approach usually employs a PET polymer or blend as the base resin; the oxygen scavenger resin is blended with the base resin and the preform is produced in the injection molding machine. The bottles are then blown either by normal Stretch Blow Molding or Heat Set Stretch Blow Molding. This eliminates delamination problems and some capital costs associated with co-injection. However, the major obstacle is that 80% of the world's beverages like beer require tunnel pasteurization for retention of taste and flavor. This puts beverages like beer into the bottle at temperatures that expose it to thermal stress and gas pressures that typically cause such PET mono layer bottles to fail.

To redress this problem various methods have been tried out:
[a] Oriented PET barrier bottles have emerged recently among blow molders and food-packaging companies. Published PCT patent application WO 9813266A1 discloses a transparent oxygen-scavenging article for packaging oxygen-sensitive products, such as beer, juice, ketchup, etc. The bottle includes a biaxially-oriented aromatic polyester polymer such as polyethylene terephthalate (PET) or polyethylene naphthalate (PEN), and an oxygen-scavenging aromatic ester polymer compatible with the polyester polymer.
[b] Thus, bottles can be made from non-PET polyesters with lower gas permeability, such as polyethylene naphthalate (PEN). PEN, a cousin of PET, typically has potential to deliver a five-fold improvement in both CO₂ and O₂ barrier versus mono layer PET, along with higher heat resistance and good clarity. PEN has a Tg of ~120°C, far exceeding that for PET, so PEN polymers have potential to deliver monolayer bottles to withstand tunnel pasteurization, but there are difficulties in stretch blow molding these bottles and the technology has achieved limited success due to erratic behaviour and haze in injection molding with conventional technology. Further difficulties are encountered in bottle blowing of PEN polymer or its blends with PET. On the whole, PEN containers are also cost prohibitive for single serve applications.
[c] Monolayer PET bottles based on PET blended or compounded with naphthalates and isophthalates, such as terpolymer or TIN polymer (i.e. a terephthalate, isophthalate and naphthalate based polymer), have also been attempted with no significant success..

Pasteurization is an alternative to sterile filtration for reducing the number of harmful microorganisms in beer. The basis for pasteurization is the heating of the beer for a predetermined period of time at specific temperatures, thereby assuring the microbiological stability of the beer. A Pasteurization Unit (PU) is defined as a one-minute exposure to a temperature of 60°C. A PU is a measure of the lethal effect on microorganisms of the heat treatment. The aim is to attain the minimum degree of pasteurization necessary to inactivate beer-spoiling organisms. The two main types of pasteurization techniques are flash and tunnel. Flash pasteurization is used for continuous treatment of bulk beer prior to filling the bottles, cans, or kegs. It is typically carried out in a plate heat-exchanger before transferring the beer to the beer tank. Tunnel pasteurization is used mainly for in-pack treatment following the crowning or closing of the bottles. Flash pasteurization is not widely used by breweries in North America (though it is very popular with the dairy and juice industries), but it has been widely adopted in Europe and Asia. In flash pasteurization, the beer is heated to at least 71.5 to 74°C and held at this temperature between 15 and 30 seconds. Flash pasteurization of beer typically uses a two- or three-stage plate heat exchanger with hot water as the heat exchange medium.

An alternative to flash pasteurization and sterile filtration is tunnel pasteurization. Tunnel pasteurization is employed after bottles have been filled, pressurized with CO₂ to about 35 psi or ~ 4.0 Gas Volume (GV) and sealed. The bottles are loaded at one end of the pasteurizer and passed under sprays of water as they move along the conveyor. The sprays are so arranged that the bottles are subjected to increasingly hot water spray until the pasteurization temperature (usually 60°C) is reached by the beer in the bottles. The bottles are then gradually cooled with water until they are discharged from the end of the pasteurizer. Temperature changes have to be made in stages to prevent the bottles from breaking, if not reduce the incidence of the same. Passage through the tunnel pasteurizer takes about an hour, comprising about 15 - 20 minutes for heating up the product to 60°C plus, about 20 minutes for maintaining the product at 60°C and about 15 - 20 minutes for cooling the product to room temperature.

US patent 6863988 discloses oxygen scavenging monolayer bottles comprised of an oxygen scavenging composition suitable for direct contact with package contents and recycle with other polyester bottles. The oxygen scavenging composition includes PET and PEN. These monolayer bottles are pasteurizable under limited conditions but their use has serious limitations due to a significant problem in injection-molding and stretch blow-molding processes. This is primarily due to the significant differential in glass transition temperature Tg and melting point Tₘ apart from the differences in crystallinity rates for PET and PEN.

Also, published PCT patent application WO9824844A1 discloses a process for controlling the change of intrinsic viscosity and transesterification during solid stating (i.e. conversion to the solid state) of a polyethylene terephthalate (PET) and polyethylene naphthalate (PEN) blend, with an effective amount of an alkylene glycol compound. The process enables the production of a copolymer based on predefined initial and final IVs and final transesterification level, by varying the solid-stating time and/or effective amount of alkylene glycol. It has been stated that the resin formed can be used for making monolayer bottles. However there is no evidence of commercialization, presumably due to the same constraints like US patent 6863988 discussed above.

Published PCT patent application WO 9511801A1 discloses improved oxygen barrier and oxygen absorbing compositions and structures comprising blends of xylylene group-containing polyamides and cobalt octoate and xylylene group-containing polyamides, polyesters and cobalt octoate. These blends have barrier properties and clarity obtained by group-containing polyamides and cobalt octoate and xylylene group-containing polyamides, polyesters and cobalt octoate. These blends have barrier properties and clarity obtained by controlling the degree of orientation and the amount of cobalt. These novel blends are used as single layers and as the core layer in multiple layer structures, and the adjacent layers are comprised of polyesters and/or polyamides. Each layer in the multiple layer structures can optionally be bonded together by the use of an adhesive or tie layer. These are however not tunnel pasteurizable nor recyclable by conventional means.

WO 00/12628 discloses a physical, immiscible blend of poly(1,3-propylene 2,6-naphthalate) and poly(ethylene terephthalate) in which no reaction has taken place. Such compositions find use as biaxially oriented films.

JP 2004114493 discloses PET-based films containing uniformly dispersed inert particles of poly(trimethylene 2,6-naphthalenedicarboxylate). The obtained films contain aggregates of two or more inert particles.

JP 2003266535 discloses a packaging polyester film having vapour deposited metal or metal oxide and having gas barrier properties.

There is therefore a need for a resin composition which can be used for making a monolayer bottle for beverages by conventional stretch blow molding processes and which has gas barrier properties, and at same time can withstand tunnel pasteurization at the required temperature and CO₂ pressure and which will meet the criterion of recyclability.

According to this invention there is provided a beverage container comprising a resin comprising a miscible blend of polyethylene terephthalate resin [PET] together with at least one naphthalate based resin selected from the group of naphthalates consisting of polytrimethylene naphthalate [PTN] and polybutylene naphthalate [PBN], wherein the ratio of PET to naphthalate based resin is from 99:1 to 75:25.

In accordance with one embodiment of the invention, the said resin is made by in situ polymerization. According to another embodiment, the said resin is made by melt blending.

According to yet another embodiment, the said resin is made by extrusion.

In accordance with a preferred embodiment of the invention, the resin includes therein at least one additive selected from the group of additives consisting of oxygen scavenging agents, nucleating agents, barrier improving agents, toners, and color improving agents.

In a particular embodiment of the invention, the naphthalate component of the resin has a PTN/PBN ratio of from 99:1 to 75:25.

The invention also provides a preform for a container for beverages made from the resin as well as to a container for beverages made from the resin.

The invention also provides a process for producing a beverage container comprising the steps of either,
i) adding at least one naphthalate based resin selected from the group of naphthalates consisting of polytrimethylene naphthalate [PTN] and polybutylene naphthalate [PBN] in the process of polymerizing polyethylene terephthalate resin [PET], said naphthalate being added either during melt polymerization of PET resin or during injection molding of preforms, such that the ratio of PET resin eventually formed to naphthalate based resin is from 99:1 to 75:25,
   or
(ii) adding the ingredients for making at least one naphthalate based resin selected from the group of naphthalates consisting of polytrimethylene naphthalate [PTN] and polybutylene naphthalate [PBN] in the process of polymerizing polyethylene terephthalate resin [PET], said naphthalate being added at least during one of the stages of formation of the PET resin, such that the ratio of PET resin eventually formed to naphthalate based resin is from 99:1 to 75:25,
   or
(iii) adding predetermined quantities of a diol selected from 1,3-propane diol (PDO) and 1,4-butane diol (BDO) and 2,6-naphthalene dicarboxylate (NDC) in the process of polymerizing polyethylene terephthalate resin [PET] resin, said naphthalate being added at least during one of the stages of formation of the PET resin, such that the ratio of PET resin eventually formed to naphthalate based resin is from 99:1 to 75:25,
   or
iv) melt-kneading polyethylene terephthalate resin [PET] and at least one naphthalate based resin selected from the group of naphthalates consisting of polytrimethylene naphthalate [PTN] and polybutylene naphthalate [PBN] in a ratio of PET resin to naphthalate based resin of from 99:1 to 75:25 under injection molding conditions comprising a molding temperature of 275 to 325°C, a residence time of 80 to 230 sec, a plasticating time of 5 to 40 sec and a shear rate of 50 to 200 sec.sup.-1 to form a preform; and blow-molding the preform under blow-molding conditions comprising a molding temperature of 80 to 160°C, a blow pressure of 25 to 40 kgf/cm.sup.2 and a mold contact time of 5 to 20 sec.

Step (iv) of the process may include the step of adding at least one additive selected from the group of additives consisting of oxygen scavenging agents, nucleating agents, barrier improving agents, toners, and color improving agents, and the naphthalate component of the resin may have a PTN/PBN ratio of from 99:1 to 75:25.

The invention therefore provides blends of PET with PTN or PBN which incorporate the advantages of the polymers PET, PTT and naphthalate based resins in the blends.

The blends are produced either by (i) by physical blending of the corresponding homopolymers in the appropriate proportion, (ii) addition of the second monomer or its components to the PET reactor in the beginning along with the PET raw materials, viz. PTA and MEG, or adding them at the end of esterification or addition towards the end of PET polymerization, and thereby prepare the blend by an in-situ polymerization, or (iii) by melt blending PET and the second polymer in a single or twin screw extruder. PTN having a relatively low melting point and melt viscosity is ideally suited to make this blended resin as it easily gets mixed and well dispersed in the polymer melt. These blended resins are suitable for conversion to a monolayer bottle which is superior to the existing alternatives, viz. multi layer versions and monolayers with TIN based polymers, in respect of morphological characteristics like crystallinity, mechanical and thermal properties, and are capable of withstanding tunnel pasteurization.

The blend resin bottles can be made by SBM with or without heat setting based on judicious design of the bottles as per the need of the applications.

Therefore, the present invention relates to a gas barrier resin composition comprising PET along with one or more materials selected from naphthalate based polymers such as polytrimethylene naphthalate and polybutylene naphthalate

This invention also relates a process of making blends of PET with PTN, or PBN or a combination thereof having suitable oxygen scavenging properties and gas barrier properties. This high barrier resins contain suitable oxygen scavengers such that the stretch blow molded monolayer bottles made out of these blend resins having adequate CO₂ and O₂ barrier properties are capable of withstanding tunnel pasteurization of beverages like beer. The present invention also relates to a process for preparing containers for packing beverages like beer, carbonated beverages, aerated drinks and other similar materials. Also, the product of the present invention may be used as a film in packing of food applications.

The main object of the invention is to seek to provide blends of two or more polymers which can have excellent gas barrier characteristics and can withstand the temperature treatment during tunnel pasteurization.

A preferred feature of the invention is to provide blends of PET and PTN or PBN or combinations thereof by an in situ polymerization, or melt blending the polymers, or compounding the polymers in an extruder.

Another preferred feature of the invention is to provide blends of PET and PTN or PBN having a composition of PET to naphthalate based resin to a maximum ratio of 75:25 by an in situ polymerization, or melt blending the polymers, or compounding the polymers in a single screw or twin screw extruder to get the naphthalate based resin in a PET polymer matrix.

Yet another preferred feature of the invention is to provide the polyester PET which is used for making the blend with the naphthalate based resin to have suitable additives like non antimony catalysts, nucleating agents, barrier improvement chemicals, and color improving compounds of cobalt, and suitable toners.

Still another preferred feature of the invention is to provide a blend of PET and naphthalate based resin and incorporate the advantages of the properties in PET and naphthalate based resins, particularly their barrier properties to oxygen and carbon dioxide.

Yet another preferred feature of the invention is to use blend of PET and naphthalate based resin to make preforms by injection molding, and convert them to monolayer bottles by stretch blow molding, and make them suitable for sensitive packaging of beverages like beer.

Another preferred feature of the invention is to have screw or crown type caps for the monolayer bottles which are suitable for the specific application, viz. beverages like beer, wherein the caps are capable of withstanding tunnel pasteurization and prevent oxygen ingress or carbon dioxide egress through the cap, without being affected by the type of closure.
Another preferred feature of the invention is to incorporate suitable oxygen scavengers in the PET-naphthalate based resin blends to act as an active oxygen barrier and prevent oxygen ingress into the monolayer beer bottle.

Another preferred feature of the invention is to incorporate suitable pigment / dye additives in the PET-naphthalate based resin blends to impart colorations like amber, green, blue, etc., as per the requirement of the package, compatible with the blend base.

Still another preferred feature of the invention is to make use of the blends of PET-naphthalate based resin for trouble free injection molding and stretch blow molding to bottles with reduced processing problems while converting to bottles, as experienced with other monolayer bottles with TIN based resins.

Yet another preferred feature of the invention is to develop the PET-naphthalate based resin blends suitable for ISBM to monolayer bottles for beer applications which will withstand tunnel pasteurization.

Recyclability through conventional methods with existing streams of recycling of bottle to bottle and into fibres/strappings is a significant feature of this invention.

A suitable PET used for making the blend containing a heavy metal free catalyst, additives like nucleating agents, barrier improvers, heat stabilizers and color improving agents has the following properties as given in Table-I for the amorphous and solid state polymerized resins, as an example and which does not limit the scope of this application.

**TABLE - 1 Properties of Amorphous and SSP PET**

| Sl.No. | PARAMETER | PET AMORPHOUS RESIN | PET SSP RESIN |
|---|---|---|---|
| 1. | Intrinsic Viscosity, dl/g | 0.64 ± 0.02 | 0.82 ±0.05 |
| 2. | COOH No.,meq/kg | 35 ±5.0 | 32 ± 5.0 |
| 3. | DEG, wt.% | Maximum 1.0 | Maximum 1.0 |
| 4. | L* | Minimum 70 | Minimum75 |
| 5. | a* | -1.0 ± 0.3 | -1.0 ± 0.2 |
| 6. | b* | -5.0 ± 1.0 | -3.0 ± 1.0 |
| 7. | T_{g},°C | 80 ± 2 | 80 ± 2 |
| 8. | Tₘ°C | 250 ± 2 | 250 ± 2 |

| | | | |
|---|---|---|---|
| Note: L*, a*, b* Color values are measured in crystallized unground sample | | | |

PTN as a substance is known as early as 1969. Good Year Tyre & Rubber Co. mentioned PTN in US Pat. No.3446778. Around the same period E I DuPont also referred to PTN and its application in helically crimpable composite staple fibers in their patent GB1165312. Shell Chemicals in one of their presentations in 1998 on "PTN and Copolymers: New Opportunities in Film and Packaging Applications" compared the properties of PET, PTT, Nylon 6 and PTN.

None of these earlier works have mentioned anything about the manufacturing process of PTN. The first recorded information on the procedure of making the copolyester of PTT containing 9 mole % of PTN by making use of PDO and NDC is available in Eastman Chemical Company's US Patent No.5989665 of 1999. Between 2000 and 2004 Tejin has a series of Japanese patents (e.g. JP2000102976, JP2000017064 etc.) mainly on applications of PTN for film usage. Tejin Limited's US Patent No.6525165 of Feb.25,2005 gives in their Example a procedure for making PTN from NDC and PDO, and the barrier properties of PTN film. A similar mention of making PTN is made in Teijin's US Patent No.6740402 of May 25,2004 for its application in polyester fibre. E I Du Pont's US Patent Application 20040043169 of March 4, 2004 also gives a procedure for making PTN from NDC and PDO for multi layer film application. Their US Patent No. 6531548 of March 11, 2003 on Blends of PTN and US Patent No. 6749785 of June 15, 2004 on Multi layer Structures of PTN also describe the same procedure of making PTN. Pfizer Health AB in their US Patent No. 6790496 of Sept.14, 2004 has used PTN for its application for packing nicotine containing products.

PTN suitable for use as the passive barrier additive in this invention can be manufactured by the procedures adopted in US 6,749,785; 6,531,548; 6,740,402 and US Application 20040043169, or in accordance with the following procedure:

9.35 kg of dimethyl 2, 6 -naphalenedicarboxylate (NDC) (from BP Amoco) and 4.15 kg of 1,3-propanediol (PDO) (from Shell chemicals) were reacted under atm. pressure in presence of manganese acetate (40 ppm as Mn) along with cobalt acetate (40 ppm as Co) as a colorant.

All these raw materials / additives are charged to the reaction vessel and ester interchange is conducted. First drop of methanol experienced at 190 °C, reactor heated to 230 °C in 150 minutes and 90% of the byproduct (MeOH) is evolved. Balance MeOH along with excess 1,3-propanediol is distilled by reducing the reaction pressure from atm. to 500 mbar in 20 minutes. During this period, mass temperature was increased to 245 °C.

Nitrogen is used to break vacuum in the reaction vessel and 50 ppm of phosphorous based heat stabilizer compound is charged to the reactor to deactivate the trans esterification catalyst.

Polymerization was carried out in presence of 200 ppm tin catalyst, viz. oxides of tin, acetates of tin or butyl stannic acid, which was charged to the reaction vessel just before commencing polymerization. Pressure in the reaction vessel was reduced to 50 mbar from 1050 mbar in 50 minutes, then the mass temperature was increased to 260 °C from 245 in 70 minutes. During this period, pressure in the reaction vessel reduces to 1 mbar.

Polymerization was terminated at the fixed set KW of the agitator to attain the desired Intrinsic Viscosity.

The amorphous PTN polymer thus obtained was a transparent, clear, semicrystalline material and its properties are given Table-II. The SSP PTN resin for making the blend of PET/PTN has the following properties (Refer Table-II), given as a typical example of a blended resin.

**TABLE - II Properties of Amorphous and SSP PTN Resin**

| No. | PARAMETER | PTN AMORPHOUS RESIN | PTN SSP RESIN |
|---|---|---|---|
| 1. | Intrinsic Viscosity, dl/g | 0.5 ± 0.05 | 0.75 ± 0.05 |
| 2. | COOH No., meq/kg | 20 ± 5 | 10 ± 3 |
| 3. | L* | 75 ± 3 | 80±3 |
| 4. | a * | -1.3 ± 0.3 | -1.0±0.3 |
| 5. | b* | -3.0 ± 0.2 | -1.8 ± 0.2 |
| 6. | T_{g}°C | 78±2 | 78 ± 2 |
| 7. | Tₘ°C | 202 ± 2 | 202 ± 2 |

| | | | |
|---|---|---|---|
| Note: L*, a*, b* Color values are measured in crystallized unground sample | | | |

There are not many references for the manufacture, preparation and application of PBN. Japanese Patent (JP) 6107921 deals with the melt stability of PBN. JP6172626 describes a PBN resin with improved impact resistance by blending polyester-ether elastomer. JP7138461 describes a PEN/PBN composition with excellent heat resistance, moldability and mechanical properties. SSP of PBN to improve heat stability, hydrolysis resistance and hue are described in JP2000159866 which also mentions the synthesis of PBN using a Ti containing composite catalyst. JP2003214564 describes the application of PBN for fuel hose consisting of an inner layer of PBN elastomer which is claimed to be superior in low permeability to fuel for an automobile. US6294234 compares PBN which has a higher bending strength and flexibility and a lower tensile strength and impact strength with another thermoplastic material used as a conduit for fuel or fuel vapor. US5663238 describes a random copolyester of PEN and PBN and gives details of its synthesis.

PBN for use in this invention may be produced by reacting 10 kg of NDC with 5.5 kg of BDO in presence of butyl tin catalyst (2.5 g) added in two stages before and after esterification. Esterification was carried out at a max. temperature of 195°C and the polycondensation at a max temperature of 254°C to get the required I.V. of the amorphous PBN, which was subjected to SSP to increase the I.V. for alloying with PET. The properties of the amorphous and SSP PBN resin are given in Table-III.

**TABLE - III Properties of Amorphous and SSP PBN Resin**

| No. | PARAMETER | PBN AMORPHOUS RESIN | PBN SSP RESIN |
|---|---|---|---|
| 1. | Intrinsic Viscosity, dl/g | 0.6 ± 0.02 | 0.83 ± 0.03 |
| 2. | COOH No., meq/kg | 15 ± 3 | 10 ± 3 |
| 3. | L* | 82 ± 3 | 82 ± 3 |
| 4. | a* | -1.3 ± 0.3 | -1.0 + 0.3 |
| 5. | b* | -2.0 ± 0.2 | -0.8 ± 0.2 |
| 6. | T_{g}°C | 80 ± 2 | 80 ± 2 |
| 7. | Tₘ°C | 240 ± 2 | 240 ± 2 |

The above three resins of PET, PTN or PBN are blended in the proportion of PET: naphthalate based resin ranging between 99:1 and 50:50 and compounded in a twin screw extruder. While compounding, additives like oxygen scavenger (quantity ranging between 500 and 3000 ppm) and the appropriate pigment for coloration, viz. amber, green etc., are also added.

Alternatively, instead of separately making the PTN or PBN, the required amounts of 1,3-propane diol (PDO) or 1,4-butane diol (BDO) and 2,6-naphthalene dicarboxylate NDC) may be added along with the PET raw materials, viz. PTA and MEG, in the reactor, or the PDO/BDO and NDC may be added at the end of the esterification of PTA and MEG, or they may be added towards the end of PET polymerization such that the in-situ polymerization of PDO/BDO and NDC takes place and gets blended in the PET system giving the required PET-naphthalate based resin blend.

The properties of the compounded blends of PET-naphthalate based resin containing the oxygen scavenger and the colored pigments are given Table-IV.

The present invention will now be illustrated by way of example.

### Examples of Preparation of PET-PTN or PET-PBN or PET-PTN-PBN Alloy (8 % as a typical case)

### Example 1

**Co Extrusion:** 92 kg PET resin and 8 kg of PTN are thoroughly mixed, dried and processed through an extruder. The zone temperatures of the extruder are maintained between 260 and 285°C. The molten resin blend is extruded out as a strand, cooled and cut into granules/chips. The resin blend is directly used for injection molding the preforms followed by stretch blowing to bottles.

### Example 2

**Co Extrusion:** In Example 1 the PTN resin was replaced by 8 kg of PBN and bottles were made as Example 1.

### Example 3

**Co Extrusion:** In Example 1 the PTN resin was replaced by mixture of 4 kg each of PTN and PBN and bottles were made as Example 1.

### Example 4

**By Melt Blending:** PET polymer was made by reacting 8.45 kg of PTA with 3.7 kg of MEG in the presence of 2.5 g of Sb₂O₃ as the polycondensation catalyst. After the esterification and towards the end of polycondensation 0.87 kg of PTN previously formed by the process enunciated above and the combined melt was kept under agitation for an additional 15 minutes. The added PTN melted ,and got thoroughly mixed in the PET melt facilitating the exchange reaction and formation of the alloy of the resins which are processed to bottles as per Example 1.

### Example 5

**By Melt Blending:** In Example 4, instead of PTN resin 0.87 kg of previously formed PBN resin chips was added and the combined melt was kept under agitation for an additional 15 minutes. The added PBN melted and got thoroughly mixed in the PET melt, facilitating the exchange reaction and formation of the blend of the resins which are processed to bottles as per Example 1.

### Example 6

**By Melt Blending:** In Example 4, instead of PTN resin a mixture of 0.435 kg each of previously formed PTN and PBN resin was added and the combined melt was kept under agitation for an additional 15 minutes. The added PTN/PBN mixture melted and got thoroughly mixed in the PET melt facilitating the exchange reaction and formation of the blend of the resins which are processed to bottles as per Example 1.

### Example 7

**Raw material blending:** PET-PTN blend was formed by taking 7.7 kg PTA, 0.75 kg NDC, 3.37 kg MEG and 0.33 kg PDO in an esterification reactor. In addition to the antimony catalyst (2.5 g), 4 ppm of Mn acetate, 4 ppm of cobalt acetate and 20 ppm of butyl tin were added as additional catalysts. The esterification and polycondensation are carried out by the normal procedure and PET-PTN blend was taken out as chips. These chips were converted into bottles as per Example 1.

### Example 8

**Raw material blending:** The same reactants were mixed in a paste of PTA and charged to the esterificatrion reactor. The esterification and polycondensation was carried out as per Example 7 and by the normal procedure and PET-PTN blend granules were taken out and converted to bottles as per Example 1.

### Example 9

**Raw material blending:** PET-PBN blend: 7.65 kg of PTA, 0.80 kg NDC, 3.26 kg MEG and 0.4 kg BDO were taken in the esterification reactor. In addition to the antimony catalyst (2.5 g), 0.2 g of butyl tin was added as additional catalysts. The esterification and polycondensation was carried out as per Example 7 and by the normal procedure and PET-PBN blend granules were taken out and converted to bottles as per Example 1.

### Example 10

**Raw material blending:** PET-PTN-PBN blend: 7.7 kg of PTA, 0.77 kg of NDC, 3.3 kg of MEG, 0.17 kg PDO and 0.2 kg of BDO were taken in the esterification reactor. In addition to the antimony catalyst (2.5 g), 0.2 g of butyl tin are added as additional catalysts. The esterification and polycondensation was carried out as per Example 7 and by the normal procedure and PET-PTN-PBN alloy granules were taken out and converted to bottles as per Example 1.

### Example 11

The same reactants of Example 10 were mixed in a paste of PTA and charged to the esterificatrion reactor. The esterification and polycondensation were carried out as per Example 7 and by the normal procedure and PET-PBN-PTN alloy granules were taken out and converted to bottles as per Example 1.

In all the above Examples, the PET prepared is a homopolyester. Depending on the need, a maximum of 2 % isophthalic acid (IPA) is added while making the PET to prepare the copolyester of PET-IPA.

### Preparation of the PET alloy of PTN, PBN and PTN-PBN with Barrier and Oxygen Scavenger additive.

While preparing the PET or the PET-PTN, PET-PBN and the PET-PTN-PBN alloys the barrier and OS are incorporated in the resin in the following manner, as an example.

### Examples 12 to 15

78 kg PTA and 34 kg MEG were taken in the esterification reactor [could be made into a paste and added into the esterifier]. 7.5 g of sodium acetate, 1.35 g of sodium benzoate, 0.022 kg of Nyacol (Nano silica), and 2 g of sodium salicylate are added as barrier additives. 1 g of the clear fast reheat additive is also added together with 8.48 g of cobalt acetate, 1.5 ppm each of the Red and Blue toners were added improve the color of the polymer. Towards the end of polymerization in different batches [1] 8 kg of PTN , [2] 8 kg of PBN and [3] a mixture of 4 kg each of PTN and PBN were added to the melt and the mixed melt was kept under agitation for an additional period of 15 minutes. The molten PET-PTN blend resin, PET-PBN blend resin and PET-PTN-PBN blend resin with the barrier additives are taken out as a strand, cooled and cut into granules.

Alternatively, the Oxygen Scavenger could be added as a master batch to the blend during the bottle making, or the Oxygen Scavenger as such could be added as a powder in the extruder along with blend chips before making the bottles.

The bottles were molded under injection molding conditions which include a molding temperature of 275 to 325°C, a residence time of 80 to 230 sec, a plasticizing time of 5 to 40 sec and a shear rate of 50 to 200 sec.sup.-1 to form a preform; and blow-molding the preform under blow-molding conditions comprising a molding temperature of 80 to 160°C, a blow pressure of 25 to 40 kgf/cm.sup.2 and a mold contact time of 5 to 20 sec.

**TABLE - IV Properties of PET-PTN & PET-PBN Blends made in accordance with the aforesaid Examples**

| Sl.No. | PARAMETER | BLEND PET/PTN | BLEND PET/PBN |
|---|---|---|---|
| 1. | Intrinsic Viscosity, dl/g | 0.88 ± 0.02 | 0.82 ± 0.02 |
| 2. | T_{g}°C | 80±2 | 81±2 |
| 3. | Tₘ°C | 248 ± 2 | 252 ± 2 |
| 4. | % Crystallinity | 33 ±3 | 36 ± 3 |

The compounded blend resins of PET-naphthalate based resin are dried to a moisture level of < 0.005% and injection molded into preforms. The preforms are converted to 330 ml, 500 ml and 650 ml bottles by ISBM method both by normal and heat setting procedures.

The oxygen and carbon dioxide permeation through a particular set of these bottles are checked and the results are given in Table-V along with a comparison with PET, PEN, PTN and PBN resin.

**TABLE - V Comparison of the Barrier Properties of PET/PTN bottles Vs. Bottles of PET, PEN, PTN and PBN**

| S1. No. | Permeation or Gas Transmission, cc.mil/100in2 .atm.day at 35°C | PET | PEN | PTN | PBN | PET/PTN | PET/ PBN |
|---|---|---|---|---|---|---|---|
| 1 | Oxygen | 12 | 6 | 3 | 2 | 4 | 3 |
| 2 | Carbon Dioxide | 65 | 17 | 10 | 9 | 15 | 13 |

It can be seen from the above data that the PET/naphthalate based resin blend with active oxygen scavenger has excellent barrier properties against oxygen and carbon dioxide which are detrimental for beer.

Table - VI gives the details of carbon dioxide (CO₂) retention and oxygen (O₂) ingress in PET/naphthalate based resin blended empty bottles of different sizes. The CO₂ permeation is measured by GMS equipment supplied by Applied Films, Germany which gives the barrier improvement factor (BIF) with respect to a reference as well as the permeation of CO₂ with respect to time. The O₂ ingress was measured by Orbisphere oxygen analyzing equipment. For comparison data for a normal carbonated soft drink (CSD) bottle is also given.

**TABLE - VI CO₂ and O₂ Permeation in PET/PTN (92:8) Blended Bottles under Ambient Conditions**

| Serial No. | Bottle Weight, g | Bottle Volume, ml | % Loss in CO₂ /week | ppm gain of O₂ in one month | Remarks |
|---|---|---|---|---|---|
| 1. | 28 | 500 | 2.19 | 4.00 | Normal CSD |
| 2. | 24 | 330 | 2.10 | 0.75 | PET/PTN |
| 3. | 28 | 500 | 1.75 | 0.60 | PET/PTN |
| 4. | 33 | 650 | 1.52 | 0.55 | PET/PTN |

- %CO₂ Loss- If % loss is taken as 100 for CSD bottle then the PET/PTN blended bottles for Serial Nos.2, 3 and 4 will be % 96, 80 and 69 showing the barrier effectiveness of the blend bottle. Stating another way, the CO₂ barrier property of the blended bottles of Serial Nos. 2, 3 and 4 are x1.04, x1.25 and x1.44 times better than the CSD bottle. In terms of loss in CO₂ pressure with time, the generally allowed universal value is 17.5% loss as the limit. Based on this value, the CSD bottle will hold good for 8 weeks whereas Serial Nos.2, 3 and 4 will hold good for 9, 10 & 11.5 weeks.
- ppm O₂ gain- If % gain is taken as 100 for CSD bottle then the PET/PTN blended bottles for Serial Nos.2, 3 and 4 will be 19, 15 & 14 showing the combined active and passive O₂ barrier effectiveness of the blend bottle. Stating another way, the O₂ barrier property of the blended bottles of Serial Nos.2, 3 and 4 are x5.26, x6.66 & x7.14 times better than the CSD bottle.
- The CO₂ pressure is determined with a Gas Volume Tester (Zahn Nagel) provided with a Piercing Device. The bottles are filled to 50 psi with CO₂ and allowed to equilibrate for 24 hours so that the dissolved CO₂ and the head space CO₂ attains equlibrium.
- Similar experiments were carried out using PET/PBN blend having a PBN composition of 8% in PET. The results are similar to those given above except that PET/PBN gave ~5 % improvement in CO₂ egress and O₂ ingress indicating PET-PBN blend is marginally superior to PET-PTN blend.

A laboratory set up was made to simulate the tunnel pasteurization conditions wherein the filled and CO₂ pressurized bottles are subjected to 63°C for 20 minutes after the contents reach 63°C. The bottles are then taken out and kept in an ambient temperature water bath for 45 minutes. The bottles are then examined for any deformation or shape change and also for any leaks from the cap. The carbonation loss if any is checked using Gas Volume Tester with a Piercing Device.

The test results of Tunnel Pasteurization of the beer bottles filled with water and carbonated are given in Table - VII. Different bottle sizes with 28 PCO and crown caps were tested and the bottle characteristics before and after pasteurization were compared.

**Table - VII Tunnel Pasteurization of PET/PTN Blended Bottles filled with Carbonated Water**

| **TABLE - VII PET-PTN BLEND BARRIER RESIN WITH OXYGEN SCAVENGER** | | | | | | | | |
|---|---|---|---|---|---|---|---|---|
| Volume (ml) | Bottle Wt. (g) | Neck Finish | Bottle No. | Pr. (Psi) | Temp. °C | G.V. | Bottle Shape | Remarks |
| 650 | 30 | 28 PCO | 1 | 50 | 25 | 3.2 | 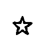 | Before |
| | | | 2 | 47 | 26 | 3.0 | 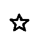 | pasteurisation |
| | | | 3 | 48 | 25 | 3.5 | OK | After |
| | | | 4 | 50 | 28 | 3.2 | OK | pasteurisation |
| | | | 5 | Kept for visual inspection | | | OK | |
| | | | | | | | | |
| 650 | 30 | CROWN | 1 | 48 | 25 | 3.2 | 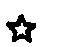 | Before |
| | | | 2 | 46 | 25 | 3.4 | 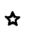 | pasteurisation |
| | | | 3 | 50 | 25 | 3.5 | OK | After |
| | | | 4 | 47 | 25 | 3.0 | OK | pasteurisation |
| | | | 5 | Kept for visual inspection | | | OK | |
| | | | | | | | | |
| 500 | 28 | 28 PCO | 1 | 46 | 25 | 3.8 | 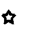 | Before |
| | | | 2 | 48 | 25 | 3.2 | 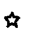 | pasteurisation |
| | | | 3 | 45 | 26 | 3.0 | OK | After |
| | | | 4 | 40 | 25 | 2.9 9 | OK | pasteurisation |
| | | | 5 | | | | | |
| | | | | | | | | |
| 500 | 28 | CROWN | 1 | 42 | 26 | 5 | 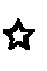 | Before |
| | | | 2 | 44 | 25 | 4.7 | 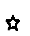 | pasteurisation |
| | | | 3 | 40 | 25 | 2.8 | OK | After |
| | | | 4 | 38 | 25 | 2.7 | OK | pasteurisation |
| | | | 5 | Kept for visual inspection | | | OK | |
| | | | | | | | | |
| 330 | 24 | 28 PCO | 1 | 50 | 26 | 4.9 | 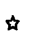 | Before |
| | | | 2 | 47 | 27 | 5.3 | 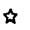 | pasteurisation |
| | | | 3 | 50 | 27 | 2.9 | OK | After |
| | | | 4 | 48 | 27 | 3.3 | OK | pasteurisation |
| | | | 5 | Kept for visual inspection | | | OK | |
| | | | | | | | | |
| 330 | 24 | CROWN | 1 | 47 | 26 | 5 | 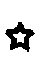 | Before |
| | | | 2 | 45 | 25 | 4.7 | 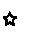 | pasteurisation |
| | | | 3 | 40 | 26 | 3.0 | OK | After |
| | | | 4 | 45 | 26 | 2.9 | OK | pasteurisation |
| | | | 5 | Kept for visual inspection | | | OK | |
| | | | | | | | | |
| 650 | 34 | CROWN | 1 | 37 | 12 | 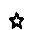 | 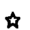 | Before |
| | | | 2 | 40 | 25 | 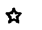 | 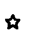 | pasteurisation |
| | | | 3 | 42 | 27 | 3.70 | OK | After |
| | | | 4 | 54 | 27 | 6.60 | OK | pasteurisation |
| | | | 5 | 42 | 27 | 5.80 | OK | |
| | | | | | | | | |

**Procedure Adopted:**
- Bottles are blown in house
- Bottles filled with water and carbonated in house
- No distortion or rocking of bottles observed
- Final dimensions of bottles found to be OK

When the experiments are repeated with PET/PBN instead of PET/PTN the pasteurization results are almost similar to that obtained with PET/PTN blend.

These results indicate that the PET/PTN/PBN blend monolayer bottles with 28PCO or crown cap are able to withstand tunnel pasteurization and are suitable for beer application.

The test results of Tunnel Pasteurization of the PET/PTN blend beer bottles filled with carbonated beer in two different breweries are given in Table - VIII A & B. Different bottle sizes with 28 PCO and crown caps were tested and the bottle characteristics before and after pasteurization were compared.

**TABLE - VIII A Tunnel Pasteurization of PET/PTN Blended Bottles filled with Beer in the Brewery**

| **TABLE VIII A BEER BOTTLE WITH OS - TEST RESULTS - BREWERY 1** | | | | | | | | |
|---|---|---|---|---|---|---|---|---|
| Volume (ml) | Bottle Wt. (g) | Neck Finish | Bottle No. | Pr. (Psi) | Temp. °C | G.V. | Bottle Shape | Remarks |
| 650 | 30 | 28 PCO | 1 | 48 | 25 | 3 | 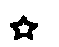 | Before |
| | | | 2 | 46 | 26 | 3.1 | 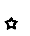 | pasteurisation |
| | | | 3 | 50 | 26 | 3.2 | OK | After |
| | | | 4 | 50 | 26 | 3.2 | OK | pasteurisation |
| | | | 5 | Kept for visual inspection | | | OK | |
| | | | | | | | | |
| 650 | 30 | CROWN | 1 | 43 | 25 | 2.9 | 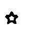 | Before |
| | | | 2 | 49 | 25 | 3.2 | 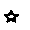 | pasteurisation |
| | | | 3 | 50 | 25 | 3.3 | OK | After |
| | | | 4 | 40 | 25 | 2.8 | OK | pasteurisation |
| | | | 5 | Kept for visual inspection | | | OK | |
| | | | | | | | | |
| 500 | 28 | 28 PCO | 1 | 45 | 25 | 3 | 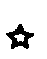 | Before |
| | | | 2 | 40 | 25 | 2.7 | 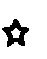 | pasteurisation |
| | | | 3 | 42 | 26 | 2.8 | OK | After |
| | | | 4 | 40 | 26 | 2.7 | OK | pasteurisation |
| | | | 5 | Kept for visual inspection | | | OK | |
| | | | | | | | | |
| 500 | 28 | CROWN | 1 | 40 | 25 | 2.9 | 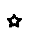 | Before |
| | | | 2 | 37 | 26 | 2.8 | 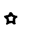 | pasteurisation |
| | | | 3 | 38 | 24 | 2.8 | OK | After |
| | | | 4 | 36 | 24 | 2.7 | OK | pasteurisation |
| | | | 5 | Kept for visual inspection | | | OK | |
| | | | | | | | | |
| 330 | 24 | 28 PCO | 1 | 50 | 25 | 3.3 | 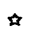 | Before |
| | | | 2 | 49 | 25 | 3.2 | 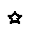 | pasteurisation |
| | | | 3 | 53 | 27 | 3.3 | OK | After |
| | | | 4 | 44 | 27 | 2.9 | OK | pasteurisation |
| | | | 5 | Kept for visual inspection | | | OK | |
| | | | | | | | | |
| 330 | 24 | CROWN | 1 | 48 | 26 | 3 | 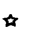 | Before |
| | | | 2 | 45 | 25 | 2.9 | 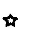 | pasteurisation |
| | | | 3 | 43 | 26 | 2.8 | OK | After |
| | | | 4 | 40 | 26 | 2.5 | OK | pasteurisation |
| | | | 5 | Kept for visual inspection | | | OK | |

**Procedure Adopted:**
- Bottles were blown in house
- Bottles carbonated in Brewery-1 followed by Tunnel Pasteurization using spray chamber at 63°C. Water temperature ramped from ambient of 28°C to 63°C in 12 minutes and temperature maintained at 63°C for 20 minutes and then cooled to ambient temperature in 45 minutes.
- The pasteurized bottles were tested in house
- Final dimensions of the bottles were taken and found OK
- No distortion or rocking of the bottles was observed

**TABLE - VIII B Tunnel Pasteurization of PET/PTN or PET/PBN Alloy / Blended Bottles filled with Beer in the Brewery**

| **TABLE VIII B BEER BOTTLE WITH OS - TEST RESULTS - BREWERY 2** | | | | | | | | |
|---|---|---|---|---|---|---|---|---|
| Volume (ml) | Bottle Wt. (g) | Neck Finish | Bottle No. | Pr. (Psi) | Temp. °C | G.V. | Bottle Shape | Remarks |
| 500 | 28 | 28 PCO | 1 | 28 | 10 | 3.4 | 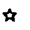 | Before |
| | | | 2 | 36 | 25 | 2.6 | 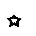 | pasteurisation |
| | | | 3 | 34 | 28 | 2.3 | OK | After |
| | | | 4 | 44 | 28 | 2.8 | OK | pasteurisation |
| | | | 5 | 37 | 28 | 2.5 | OK | |
| | | | | | | | | |
| 650 | 34 | CROWN | 1 | 35 | 10 | 3.9 | 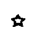 | Before |
| | | | 2 | 41 | 25 | 2.9 | 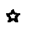 | pasteurisation |
| | | | 3 | 40 | 27 | 2.6 | OK | After |
| | | | 4 | 51 | 27 | 3.2 | OK | pasteurisation |
| | | | 5 | 43 | 27 | 2.8 | OK | |
| | | | | | | | | |
| 330 | 24 | CROWN | 1 | 32 | 10 | 3.7 | 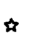 | Before |
| | | | 2 | 42 | 26 | 2.8 | 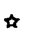 | pasteurisation |
| | | | 3 | 44 | 33 | 2.4 | OK | After |
| | | | 4 | 40 | 33 | 2.3 | OK | pasteurisation |
| | | | 5 | 42 | 33 | 2.4 | OK | |
| | | | | | | | | |

**Procedure Adopted:**
- Bottles blown in house
- Bottles filled with carbonated beer in Brewery 2
- Tunnel Pasteurization done in Brewery 2
- Pasteurized bottles tested in house
- Final dimensions of the bottles checked and found OK
- No distortion or rocking of the bottles was observed
The filled pasteurized beer bottles were also tested for the routine tests like top load, drop tests, stress cracking test, burst test and bottle weight distribution and found OK.

The head space oxygen ingress in filled and pasteurized 500 ml beer bottles with crown cap after 90 days duration was found to be 0.55 ppm. The same test with a 28 PCO cap with an OS liner gave a value of 0.62 ppm. Though both the tests have shown oxygen ingress well within the norms, the crown cap exhibits a marginal advantage.

A similar test after 90 days with these filled bottles for CO₂ retention and egress showed a drop in pressure of 8% with respect to the initial value. The loss in CO₂ pressure is again within the norms.

The UV/Amber barrier data of the PET/PTN and PET/PBN blended bottle having a 13 mil panel are given in Table-IX.

**TABLE - IX UV Barrier Data of PET-PTN or PET-PBN Alloy / Blended Bottles**

| Serial No. | Bottle Composition | % Transmission | Cut off Wavelength, nm |
|---|---|---|---|
| 1. | PET | <10 | 320 |
| 2. | PET + 8 % PTN or 8% PBN Blend | <10 | 370 |
| 3. | PET + 8% PTN or 8% PBN Blend with 0.2% Amber Color | <10 | 550 |

### Recyclability of BeerPET resins comprising a blend of PET with PTN/PBN

- Used amber colored BeerPET bottles are converted to pellets and processed through pilot plant spinning and drawing machinery to produce black fibre. The results are compared with those obtained with 100% virgin PET-PTN/PBN resin blend and the fibre properties are the same and not significantly different.
- Pellets obtained from used amber colored BeerPET bottles are blended at 10% level with 90% virgin PET-PTN/PBN resin blend and the blended resin converted to bottles by . ISBM. These bottles showed similar properties as obtained from 100% virgin alloy resin and also withstood tunnel pasteurization.

## Claims

1. A beverage container comprising a resin which comprises a miscible blend of polyethylene terephthalate resin [PET] together with at least one naphthalate based resin selected from the group of naphthalates consisting of polytrimethylene naphthalate [PTN] and polybutylene naphthalate [PBN], wherein the ratio of PET to naphthalate based resin is from 99:1 to 75:25.

2. A beverage container according to claim 1, the said resin being made by in situ polymerization, by melt blending, or by extrusion.

3. A beverage container according to claim 1 or 2, wherein the resin includes therein at least one additive selected from the group of additives consisting of oxygen scavenging agents, nucleating agents, barrier improving agents, toners, and color improving agents.

4. A beverage container according to any preceding claim, in which the naphthalate component of the resin has a PTN/PBN ratio of from 99:1 to 75:25.

5. A preform for a beverage container according to any preceding claim.

6. A process for producing a beverage container comprising the steps of either,
i) adding at least one naphthalate based resin selected from the group of naphthalates consisting of polytrimethylene naphthalate [PTN] and polybutylene naphthalate [PBN] in the process of polymerizing polyethylene terephthalate resin [PET], said naphthalate being added either during melt polymerization of PET resin or during injection molding of preforms, such that the ratio of PET resin eventually formed to naphthalate based resin is from 99:1 to 75:25,
or
(ii) adding the ingredients for making at least one naphthalate based resin selected from the group of naphthalates consisting of polytrimethylene naphthalate [PTN] and polybutylene naphthalate [PBN] in the process of polymerizing polyethylene terephthalate resin [PET], said naphthalate being added at least during one of the stages of formation of the PET resin, such that the ratio of PET resin eventually formed to naphthalate based resin is from 99:1 to 75:25,
or
(iii) adding predetermined quantities of a diol selected from 1,3-propane diol (PDO) and 1,4-butane diol (BDO) and 2,6-naphthalene dicarboxylate (NDC) in the process of polymerizing polyethylene terephthalate resin [PET] resin, said naphthalate being added at least during one of the stages of formation of the PET resin, such that the ratio of PET resin eventually formed to naphthalate based resin is from 99:1 to 75:25,
or
iv) melt-kneading polyethylene terephthalate resin [PET] and at least one naphthalate based resin selected from the group of naphthalates consisting of polytrimethylene naphthalate [PTN] and polybutylene naphthalate [PBN] in a ratio of PET resin to naphthalate based resin of from 99:1 to 75:25 under injection molding conditions comprising a molding temperature of 275 to 325°C, a residence time of 80 to 230 sec, a plasticating time of 5 to 40 sec and a shear rate of 50 to 200 sec.sup.-1 to form a preform; and blow-molding the preform under blow-molding conditions comprising a molding temperature of 80 to 160°C, a blow pressure of 25 to 40 kgf/cm.sup.2 and a mold contact time of 5 to 20 sec.

7. A process according to claim 6 part iv), in which the process includes the step of adding at least one additive selected from the group of additives consisting of oxygen scavenging agents, nucleating agents, barrier improving agents, toners, and color improving agents.

8. A process according to claim 6 part iv) or claim 7, in which the naphthalate component of the resin has PTN/PBN ratio of from 99:1 to 75:25.

## Patentansprüche

1. Ein Getränkebehälter, bestehend aus einem Harz, das eine mischbare Vermengung von Polyethylen-Terephthalat-5-Harz enthält sowie mindestens ein Naphthalat-basiertes Harz aus der Gruppe der Naphthalate bestehend aus Polytrimethylen-Naphthalat [PTN] und Polybutylen-Naphthalat [PBN], wobei das Verhältnis von PET-zu Naphthalat-basiertem Harz im Bereich von 99:1 bis 75:25 liegt.

2. Ein Getränkebehälter gemäß Patentanspruch 1, wobei das besagte Harz durch In-Situ-Polymerisation, durch Schmelzmischung oder durch Extrusion hergestellt wird.

3. Ein Getränkebehälter gemäß Patentanspruch 1 oder 2, wobei das hierin enthaltene Harz mindestens einen Zusatzstoff aus jener Gruppe an Zusatzstoffen enthält, die aus Sauerstofffängern, Nukleierungsmitteln, barriereverbessernden Substanzen, Tonern und farbverbessernden Substanzen bestehen.

4. Ein Getränkebehälter gemäß jedwedem vorherigen Patentanspruch, wobei die Naphthalat-Komponente des Harzes ein Verhältnis PTN/PBN im Bereich von 99:1 zu 75:25 aufweist.

5. Ein Formteil für einen Getränkebehälter gemäß jedwedem vorherigen Patentanspruch.

6. Ein Prozess zur Herstellung eines Getränkebehälters, bestehend aus folgenden Schritten: Entweder
i) Zugabe von mindestens einem Naphthalat-basierten Harz aus der Gruppe der Naphthalate, die aus Polytrimethylen-Naphthalat [PTN] und Polybutylen-Naphthalat [PBN] bestehen, zum Prozess der Polymerisierung von Polyethylen-Terephthalat-Harz [PET], wobei die Zugabe des besagten Naphthalats entweder während der Schmelzpolymerisation des PET-Harzes oder während des Spritzgusses der Formteile erfolgt, und zwar so, dass das Verhältnis des PET-Harzes, das schließlich zu Naphthalat-basiertem Harz geformt wird, im Bereich 99:1 bis 75:25 liegt,
5 oder
(ii) Zugabe der Bestandteile zur Herstellung von mindestens einem Naphthalat-basierten Harz aus der Gruppe der Naphthalate, die aus Polytrimethylen-Naphthalat [PTN] und Polybutylen-Naphthalat [PBN] bestehen, zum Prozess der Polymerisation von Polyethylen-Terephthalat-Harz [PET], wobei die Zugabe des besagten Naphthalats während mindestens eines Stadiums der Bildung des PET-Harzes erfolgt, und zwar so, dass das Verhältnis des PET-Harzes, das schließlich zu Naphthalat-basiertem Harz geformt wird, im Bereich 99:1 bis 75:25 liegt,
oder
(iii) Zugabe vorab festgelegter Mengen eines Diols, ausgewählt aus 1,3-Propandiol (PDO) und 1,4-Butandiol (BDO) und 2,6-Naphthalen-Dicarboxylat (NDC), zum Prozess der Polymerisierung von Polyethylen-Terephthalat-Harz [PET], wobei die Zugabe des besagten Naphthalats während mindestens eines Stadiums der Bildung des PET-Harzes erfolgt, und zwar so, dass das Verhältnis des PET-Harzes, das schließlich zu Naphthalat-basiertem Harz geformt wird, im Bereich von 99:1 bis 75:25 liegt.
oder
iv) Schmelzkneten eines Polyethylen-Terephthalat-Harzes [PET] und mindestens eines Naphthalat-basierten Harzes aus der Gruppe der Naphthalate bestehend aus Polytrimethylen-Naphthalat [PTN] und Polybutylen-Naphthalat [PBN], wobei das Verhältnis PET-Harz zu Naphthalat-basiertem Harz im Bereich von 99:1 bis 75:25 liegt, unter Spritzgießbedingungen mit einer Gießtemperatur von 275 bis 325°C, einer Verweilzeit von 80 bis 230 Sekunden, einer Plastifizierungszeit von 5 bis 40 Sekunden und einer Schergeschwindigkeit von 50 bis 200 Sekunden sup.-1 zur Bildung eines Formteils; und Blasformen des Formteils unter Blasformbedingungen mit einer Formtemperatur von 80 bis 160°C, einem Blasdruck von 25 bis 40 kgf/cm.sup.2 und einer Formkontaktzeit von 5 bis 20 Sekunden.

7. Ein Prozess gemäß Patentanspruch 6 Teil iv), wobei der Prozess folgenden Schritt beinhaltet: Zugabe von mindestens einem Zusatzstoff aus der Gruppe jener Zusatzstoffe, die aus Sauerstofffängern, Nukleierungsmitteln, barriereverbessernden Substanzen, Tonern und farbverbessernden Substanzen bestehen.

8. Ein Prozess gemäß Patentanspruch 6 Teil iv) oder Patentanspruch 7, wobei die Naphthalat-Komponente des Harzes ein Verhältnis PTN/PBN im Bereich von 99:1 bis 75:25 aufweist.

## Revendications

1. Un contenant pour boisson fait d'une résine composée d'un mélange miscible de résine de téréphtalate de polyéthylène [PET] et d'au moins une résine à base de naphthalate issue du groupe de naphthalates qui comprends le polytriméthylène naphthalate [PTN] et le polybutylène naphtalate [PBN], dans lequel la proportion de PET et de résine à base de naphthalate est de 99:1 pour 75:25.

2. Un contenant pour boisson conforme à la revendication n°1, ladite résine étant produite par polymérisation in situ, par mélange en fusion ou par extrusion.

3. Un contenant pour boisson conforme à la revendication n°1 ou n° 2 dont la résine comporte au moins un additif issu du groupe des additifs qui comprends les agents éliminant l'oxygène, les agents de nucléation, les agents améliorants de barrières, les pigments et les agents améliorants de couleurs.

4. Un contenant pour boisson conforme à toute revendication antérieure dont les proportions PTN/PBN du composant naphthalate de la résine sont de 99:1 pour 75:25.

5. Un prototype d'un contenant pour boisson conforme à toute revendication antérieure.

6. Un processus de fabrication de contenant pour boisson incluant les étapes suivantes :
i) soit l'ajout d'au moins une résine à base de naphthalate issue du groupe de naphthalates qui comprends le polytriméthylène naphthalate [PTN] et le polybutylene naphtalate [PBN] dans le processus de polymérisation de résine de téréphtalate de polyéthylène [PET], ledit naphthalate étant ajouté soit durant la polymérisation à l'état fondu de la résine PET, soit durant le moulage par injection des prototypes, de façon à ce que la proportion de résine PET finalement formée et de résine à base de soit naphtalate soit de 99:1 pour 75:25,
(ii) en ajoutant les ingrédients pour confectionner au moins une résine à base de naphthalate issue du groupe des naphtalates qui comprends le polytriméthylène naphthalate [PTN] et le polybutylène naphtalate [PBN] dans le processus de polymérisation de résine de téréphtalate de polyéthylène [PET], ledit naphthalate étant ajouté au moins pendant une des étapes de formation de la résine PET, de façon à ce que la proportion de résine PET finalement formée et de résine à base de naphtalate soit de 99:1 pour 75:25,
soit
(iii) en ajoutant des quantités prédéterminées d'une diol issue de propanediol 1,3 (PDO), de butanediol 1,4 (BDO) et de naphtalène dicarboxylate 2,6 (NDC) durant le processus de polymérisation de résine de téréphtalate de polyéthylène [PET], ledit naphthalate étant ajouté au moins pendant une des étapes de formation de la résine PET de façon à ce que la proportion de résine PET finalement formée et de résine à base de naphthalate soit de 99:1 pour 75:25, soir
iv) en malaxant à l'état fondu de la résine de téréphtalate de polyéthylène [PET] et au moins une résine à base de naphthalate issue du groupe des naphthalates qui comprends le polytriméthylène naphthalate [PTN] et le polybutylène naphtalate [PBN] de façon à ce que la proportion de résine PET et de résine à base de naphthalate soit de 99:1 pour 75:25 en respectant les conditions suivantes : température du moulage par injection ; 275 à 325°C, temps de résidence ; 80 à 230 secondes, temps de malaxage ; 5 à 40 secondes et taux de cisaillement ; 50 à 200 sec.sup.-1 pour créer un prototype; et mouler par soufflage le prototype en respectant les conditions suivante : température du moulage ; 80 à 160°C, pression de soufflage ; 25 à 40 kgf/cm sup-2 et temps de contact avec le moule ; 5 à 20 secondes.

7. Un processus conforme à la revendication n°6 alinéa iv) qui implique une étape d'ajout d'au moins un additif issu du groupe des additifs qui comprends les agents éliminant l'oxygène, les agents de nucléation, les agents améliorants de barrières, les pigments et les agents améliorants de couleurs.

8. Un processus conforme à la revendication n°6 alinéa iv) ou à la revendication 7, 15 selon laquelle le composé naphthalate de la résine aurait un ratio PTN/PBN de 99:1 pour 75:25.
